# EUROPÄISCHE PATENTANMELDUNG

(11) **EP 0 985 864 A2**
(43) Veröffentlichungstag der Anmeldung: **15.03.2000**
(21) Anmeldenummer: 99115792.6
(22) Anmeldetag: 11.08.1999
(51) Int. Cl.: F16L 3/24, H02G 3/30, H01R 4/64

(54) **Kabelhaltevorrichtung**

(30) Priorität: 08.09.1998 DE 19840959
(71) Anmelder: Friedrich Lütze Elektro GmbH, 71384 Weinstadt (DE)
(72) Erfinder: Schauermann, Dettmar, 64711 Erbach (DE)
(74) Vertreter: Vetter, Hans, Dipl.-Phys. Dr.

(57) **Zusammenfassung**

Es wird eine Kabelhaltevorrichtung mit einem Halteblech (10) vorgeschlagen, das eine Vielzahl von nebeneinander in Reihe angeordneten gleichartigen Haltedurchbrüchen (11) aufweist. Wenigstens eine Halteklammer (13) besitzt zwei durch einen Haltebereich (14) miteinander verbundene Steckfüße (15) zum Einstecken in zwei der Haltedurchbrüche (11). Dabei bildet die Halteklammer (13) im eingesteckten Zustand eine U-ähnliche Anordnung, durch die ein zu fixierendes Kabel (12) umgreifbar und an das Halteblech (10) anpreßbar ist. Die Steckfüße (15) weisen eine mit den Haltedurchbrüchen (11) verrastende Rastvorrichtung (16) auf. Auf diese Weise können Kabel (12) in variabler Weise durch einfaches Einstecken einer Halteklammer am Halteblech (10) fixiert werden, wobei auch ein einfaches Lösen und Versetzen möglich ist.

## Beschreibung

Die Erfindung betrifft eine Kabelhaltevorrichtung mit einem Halteblech, wie sie beispielsweise in Schaltschränken verwendet wird. Die zugeführten Kabel müssen vor ihrer elektrischen Anschlußstelle mechanisch fixiert werden, wobei häufig auch noch eine Masseverbindung mit der Kabelabschirmung hergestellt werden muß. Hierzu wird in bekannter Weise das Kabel im Haltebereich bis zur Kabelabschirmung abisoliert, wonach dann eine Fixierung an einer metallischen Schiene mittels einer Schraubklemme oder Schelle erfolgt.

Der Nachteil dieser bekannten Befestigungsart besteht zum einen darin, daß zur Fixierung der Schraubklemme oder Schelle Schraubenlöcher gebohrt werden müssen, wobei die Schraubbefestigung einen nicht unerheblichen Arbeitsaufwand darstellt. Eine nachträgliche Verschiebung der Befestigungsstelle ist sehr umständlich und erfordert wiederum einen größeren Arbeitsaufwand. Da die zu befestigenden Kabel gewöhnlich unterschiedliche Durchmesser aufweisen, müssen unterschiedliche Größen von Schraubklemmen oder Schellen bereitgehalten werden. Zum anderen besteht auch ein Nachteil darin, daß infolge der festzuschraubenden Haltelaschen der Schraubklemmen oder Schellen der Minimalabstand der zu befestigenden Kabel nicht unerheblich ist, so daß eine oft wünschenswerte Befestigung von Kabeln direkt nebeneinander kaum möglich ist.

Eine Aufgabe der vorliegenden Erfindung besteht somit darin, eine Kabelhaltevorrichtung zu schaffen, die das Befestigen und Lösen von Kabeln an einem Halteblech ohne wesentlichen Montageaufwand ermöglicht.

Diese Aufgabe wird erfindungsgemäß durch eine Kabelhaltevorrichtung mit einem Halteblech gelöst, das eine Vielzahl von nebeneinander in Reihe angeordneten gleichartigen Haltedurchbrüchen aufweist, mit wenigstens einer Halteklammer, die zwei durch einen Haltebereich miteinander verbundene Steckfüße zum Einstecken in zwei der Haltedurchbrüche besitzt und die im eingesteckten Zustand eine U-ähnliche Anordnung bildet, durch die ein zu fixierendes Kabel umgreifbar und an das Halteblech anpreßbar ist, wobei die Steckfüße eine mit den Haltedurchbrüchen verrastende Rastvorrichtung aufweisen.

Der Vorteil der erfindungsgemäßen Kabelhaltevorrichtung besteht insbesondere darin, daß zum Fixieren eines Kabels lediglich eine Halteklammer so auf das Kabel aufgesteckt werden muß, daß ihre beiden Steckfüße zu beiden Seiten des Kabels jeweils in einen Haltedurchbruch eingreifen. Beim Einstecken erfolgt dann eine automatische Verrastung und Fixierung des Kabels. Durch die Vielzahl von nebeneinander in Reihe angeordneten Haltedurchbrüchen kann der Befestigungsort des Kabels praktisch beliebig gewählt werden. Die Halteklammer kann dabei je nach Durchmesser des zu befestigenden Kabels in zwei nebeneinander angeordnete Haltedurchbrüche oder in zwei weiter auseinanderliegende Haltedurchbrüche eingesetzt werden.

Durch die in den Unteransprüchen aufgeführten Maßnahmen sind vorteilhafte Weiterbildungen und Verbesserungen der im Anspruch 1 angegebenen Kabelhaltevorrichtung möglich.

Die Haltedurchbrüche sind zweckmäßigerweise als parallele Schlitze ausgebildet, um eine breite und sichere Fixierung der entsprechend geformten Steckfüße zu gewährleisten.

Die Halteklammer ist zweckmäßigerweise als elastisch federnde Anordnung ausgebildet, wobei die zum Einsetzen in die beiden Haltedurchbrüche gegeneinander zu drückenden Steckfüße im eingesetzten Zustand federnd an den am weitesten voneinander entfernten äußeren Kanten oder Kantenbereiche der beiden Haltedurchbrüche anliegen. Durch Zusammendrücken der beiden Steckfüße ist eine einfache Entrastung und ein einfaches Lösen der Halteklammer möglich. Die elastisch federnde Anordnung der Halteklammer gewährleistet eine Anpassung an unterschiedliche Querschnitte von Kabeln.

Zur sicheren Verrastung weisen die beiden Steckfüße in entgegengesetzte Richtungen weisende Rastvorsprünge und/oder Rastausnehmungen auf, die zur Verrastung mit den jeweils äußeren Kanten von zwei Haltedurchbrüchen ausgebildet sind. Diese äußeren Kanten wirken dadurch als Gegenrastmittel für die Rastvorsprünge und/oder Rastausnehmungen.

In vorteilhafter Weise weist jeder Steckfuß wenigstens eine in der Steckrichtung verlaufende Reihe von Rastzähnen auf, so daß bei praktisch jeder Einstecktiefe der Steckfüße eine Verrastung zustande kommt. Diese Maßnahme hilft wesentlich dazu bei, daß eine Sorte von Halteklammern für sehr unterschiedliche Kabeldurchmesser verwendet werden kann.

In einer besonders kostengünstigen und einfach herzustellenden Ausführung ist jeder Steckfuß als Blechstreifen ausgebildet, an dessen Längskanten nach außen abgewinkelt jeweils eine Reihe der Rastzähne angeordnet, insbesondere einstückig angeformt ist. Dadurch können die Steckfüße mit den entsprechenden Rastzähnen als einfache Bestandteile hergestellt werden.

In einer weiteren vorteilhaften Ausgestaltung weisen die Rastzähne an ihren in die Einsteckrichtung weisenden Seiten das Einstecken erleichternde Zahnrampen und auf den jeweils anderen Seiten im wesentlichen senkrecht zur Einsteckrichtung angeordnete Zahnkanten auf. Hierdurch kann die Halteklammer nach dem Einsetzen der Steckfüße in zwei Haltedurchbrüche auf einfache Weise gegen das Kabel gedrückt werden, wobei dann in einfacher Weise eine klemmende und sichere Verrastung erfolgt. Die Halteklammern können besonders einfach und kostengünstig dadurch hergestellt werden, daß sie jeweils als einstückiges Stanz-/Biegeteil ausgebildet sind und aus Metallblech bestehen.

Eine noch bessere Anpassung an unterschiedliche Kabeldurchmesser und eine noch sicherere Klemmfixierung wird dadurch erreicht, daß an den Haltebereich eine im eingesteckten Zustand der Halteklammer elastisch gegen ein zu haltendes Kabel drückende Haltefederanordnung angeformt ist. Diese ist vorzugsweise als einstückig an den Haltebereich angeformter Blechstreifen ausgebildet, der sich von einer Kante des Halteblechs aus entlang der im eingesteckten Zustand zum Halteblech hinweisenden Unterseite des Haltebereichs erstreckt.

In einer alternativen vorteilhaften Ausgestaltung ist der Haltebereich als Zugfeder ausgebildet, der vorzugsweise eine Flachgestalt besitzt. Diese Ausführung eignet sich insbesondere für Kabel mit sehr großen Durchmessern, wobei infolge der Ausbildung des Haltebereichs als Zugfeder ebenfalls eine sehr gute Anpassung an die Querschnittsgestalt des zu befestigenden Kabels erreicht wird. Mit Hilfe einer solchen Halteklammer können beispielsweise auch mehrere Kabel zusammen fixiert werden.

Das Halteblech weist in einer einfachen Ausgestaltung einen U-förmigen Querschnitt auf, wobei die Haltedurchbrüche am Verbindungssteg zwischen den streifenartigen U-Schenkeln angeordnet sind. Bei einer verbesserten Ausführung sind die Haltedurchbrüche im mittleren Bereich des Verbindungsstegs angeordnet, und an den beiden seitlichen Bereichen sind Halteelemente mit insbesondere T-förmiger Gestalt ausgeformt.

Durch diese Halteelemente können beispielsweise isolierte Bereiche zu beiden Seiten des abisolierten Bereichs zusätzlich mit Haltestreifen oder -bändern oder -drähten befestigt werden. Zur Anpassung an den verringerten Querschnitt des Kabels im abisolierten Bereich ist in vorteilhafter Weise die Ebene des mittleren Bereichs des Verbindungsstegs gegenüber der Ebene der beiden seitlichen Bereiche zur von den U-Schenkeln abgewandten Seite hin versetzt, und zwar insbesondere um einen Wert, der der Dicke der Isolierschicht entspricht, so daß das Kabel linear fixiert werden kann.

In einer weiteren vorteilhaften Ausgestaltung ist das Halteblech an einer Seite mit einer Halterung zum klemmenden Anstecken oder Anschrauben an eine Tragschiene oder einen Montagesteg und an der gegenüberliegenden Seite mit den Haltedurchbrüchen versehen. Die Halterung ist dabei zweckmäßigerweise als umgebogener Endbereich des Halteblechs ausgebildet. Ein solches Halteblech kann somit auf sehr einfache und schnelle Weise an eine vorhandene Tragschiene oder einen vorhandenen Montagesteg angeklemmt bzw. angerastet werden, so daß dieser an der jeweils erforderlichen Stelle mit einem solchen Halteblech nachträglich versehen werden kann, das auch verschoben werden kann.

Zur sicheren Fixierung ist die Halterung zur klemmenden Verrastung mit einem insbesondere an einem U-Schenkel der Tragschiene oder des Montagestegs angeorndeten Raststreifen ausgebildet. Ein solcher Raststreifen ist bei bekannten Tragschienen bzw. Montagestege häufig ohnehin vorhanden.

Das Halteblech und die wenigstens eine Halteklammer besteht wenigstens teilweise aus einem elektrisch leitfähigen Material, insbesondere aus Metall, damit bei der Fixierung mittels der Halteklammer gleichzeitig eine Masseverbindung der Abschirmung des Kabels hergestellt wird.

Ausführungsbeispiele der Erfindung sind in der Zeichnung dargestellt und in der nachfolgenden Beschreibung näher erläutert. Es zeigen:
- Figur 1: ein mittels einer Halteklammer an einem U-förmigen Halteblech fixiertes Kabel in der Draufsicht,
- Figur 2: die in Figur 1 dargestellte Halteklammer in einer Seitenansicht,
- Figur 3: eine abgewandelte Ausführung der in den Figuren 1 und 2 dargestellten Halteklammer in einer perspektivischen Ansicht, bei der eine zweiteilige Haltefederanordnung vorgesehen ist,
- Figur 4: eine abgewandelte Ausführung eines Halteblechs,
- Figur 5: eine Profilansicht des in Figur 4 dargestellten Halteblechs,
- Figur 6: ein weiteres Ausführungsbeispiel einer Halteklammer in einer Seitenansicht, bei der der Haltebereich als flache Zugfeder ausgebildet ist,
- Figur 7: eine weitere Ausführung eines an einen Montagesteg ansteckbaren Halteblechs in einer perspektivischen Darstellung und
- Figur 8: eine Stirnansicht der in Figur 7 dargestellten Anordnung als Teildarstellung.

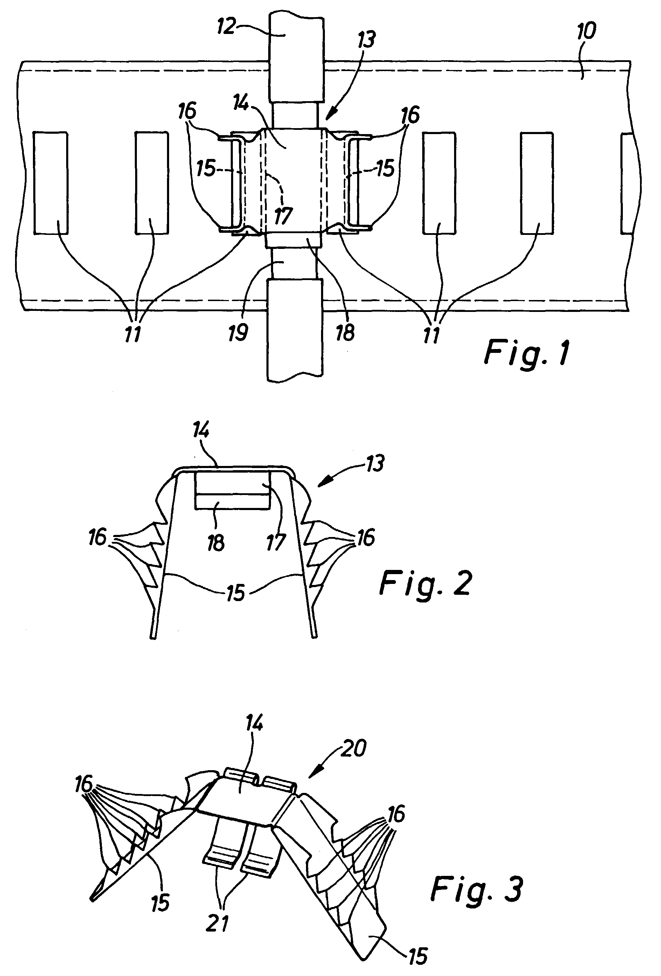

Bei dem in den Figuren 1 und 2 dargestellten ersten Ausführungsbeispiel besteht eine Kabelhaltevorrichtung aus einem Halteblech 10 mit U-förmigem Querschnitt, das beliebig ablängbar als Halteschiene für Kabel in einem nicht dargestellten Schaltschrank oder einer sonstigen Schaltungsanordnung montierbar ist, beispielsweise neben einem Montagesteg für elektrische Schalteinheiten. Dieses U-förmige Halteblech besteht beispielsweise aus verzinktem Stahlblech oder ist als Aluminiumstrangprofil ausgebildet und besitzt mittig eine Reihe von parallelen, schlitzartigen, rechteckigen, äquidistanten Haltedurchbrüchen 11.

Zur Fixierung eines Kabels 12 an diesem Halteblech 10 dient eine Halteklammer 13, wobei zur Befestigung einer Vielzahl von Kabeln 12 eine entsprechend große Anzahl von Halteklammern 13 erforderlich ist. Diese Halteklammer 13 ist als einstückiges Stanz-/Biegeteil aus einem dünnen federnden Metallblech hergestellt. Sie besteht im wesentlichen aus zwei über einen Haltebereich 14 miteinander verbundenen Steckfüßen 15, wobei der Haltebereich 14 und die Steckfüße 15 im wesentlichen durch einen gebogenen Blechstreifen gebildet werden, dessen Breite geringfügig kleiner als die Länge der Haltedurchbrüche 11 ist. Die beiden Längsränder der beiden Steckfüße 15 besitzen jeweils eine Reihe von Rastzähnen 16, die jeweils im wesentlichen rechtwinklig zur Ebene der Steckfüße 15 nach außen hin abgewinkelt sind. Um das Einstecken der Steckfüße 15 in zwei Haltedurchbrüche 11 zu erleichtern, weisen die Rastzähne 16 an ihren in die Einsteckrichtung weisenden Seiten, also zum freien Ende der Steckfüße 15 hin schräge Zahnrampen auf, während sie auf der jeweils anderen Seite im wesentlichen senkrecht zur Einsteckrichtung angeordnete Zahnkanten aufweisen, die eine sichere Verrastung mit Längskanten der Haltedurchbrüche 11 gewährleisten.

An den mittleren Haltebereich 14 ist seitlich eine durch einen Blechstreifen gebildete Haltefeder 17 angeformt, die unterhalb des Haltebereichs 14 entlang diesem beabstandet verläuft, wobei der Endbereich 18 dieser Haltefeder 17 zum Haltebereich 14 hin abgewinkelt oder gekrümmt ist. Zum Fixieren des Kabels 12 wird dieses senkrecht zur Längsrichtung des Halteblechs 10 zwischen zwei Haltedurchbrüche 11 gelegt. Dann werden die schräg relativ zur Mittellinie auseinanderlaufenden Steckfüße 15 mit zwei Fingern so zusammengedrückt, daß ihre freien Endbereiche in die beiden Haltedurchbrüche 11 zu beiden Seiten des Kabels 12 eingesteckt werden können. Nun wird die Halteklammer 13 durch Druck auf den Haltebereich 14 in die beiden Haltedurchbrüche 11 so weit eingedrückt, bis das Kabel 12 fest fixiert ist. Da die Rastzähne 16 jeweils mit den beiden nach außen weisenden Seitenkanten dieser beiden Haltedurchbrüche 11 verrasten, erfolgt eine automatische Verrastung der Halteklammer 13. Dabei drückt die Haltefeder 17 im verrasteten Zustand zusätzlich das Kabel 12 gegen das Halteblech 10. In einer einfacheren Ausführung kann die Haltefeder 17 selbstverständlich auch entfallen.

Durch die Reihen von Rastzähnen 16 können Kabel 12 mit unterschiedlichen Durchmessern fixiert werden. Bei Kabeln 12 mit extrem großem Durchmesser können selbstverständlich auch größere Halteklammern 13 eingesetzt werden, deren Steckfüße 15 dann nicht in nebeneinander angeordnete Haltedurchbrüche 11 sondern in weiter voneinander entfernte Haltedurchbrüche eingesetzt werden.

Um gleichzeitig mit der Fixierung des Kabels 12 dessen Abschirmung mit Masse zu verbinden, wird das Kabel 12 im Bereich der Halteklammer 13 bis auf die metallische Kabelabschirmung 19 abisoliert. Durch die metallische Halteklammer 13 und das metallische Halteblech 10 erfolgt dann beim Fixieren des Kabels 12 automatische eine elektrische Masseverbindung. Prinzipiell könnte das Halteblech 10 und/oder die Halteklammer 13 auch aus einem anderen leitfähigen Material bestehen, beispielsweise aus elektrisch leitfähigem Kunststoff oder aus Kunststoff mit einer entsprechenden metallischen Beschichtung.

In Figur 3 ist eine Abwandlung der in den Figuren 1 und 2 dargestellten Halteklammer dargestellt, wobei gleiche oder gleichwirkende Bereich und Teile mit denselben Bezugszeichen versehen und nicht nochmals beschrieben sind. Im Unterschied zur Halteklammer 13 weist die in Figur 3 dargestellte Halteklammer 20 keine einteilige Haltefeder 17, sondern eine zweigeteilte Haltefeder 21 auf. Da die beiden Streifen der zweigeteilten Haltefeder 21 unabhängig voneinander agieren, können beispielsweise zwei unterschiedliche Kabel gleichzeitig mit der einen Halteklammer 20 fixiert werden. Auch bei einem einzigen Kabel, das nicht exakt zentriert ist, hat eine solche zweigeteilte Haltefeder 21 ihre Vorteile. Die Haltefeder 21 kann dabei prinzipiell auch noch in eine größere Zahl von Streifen aufgeteilt sein.

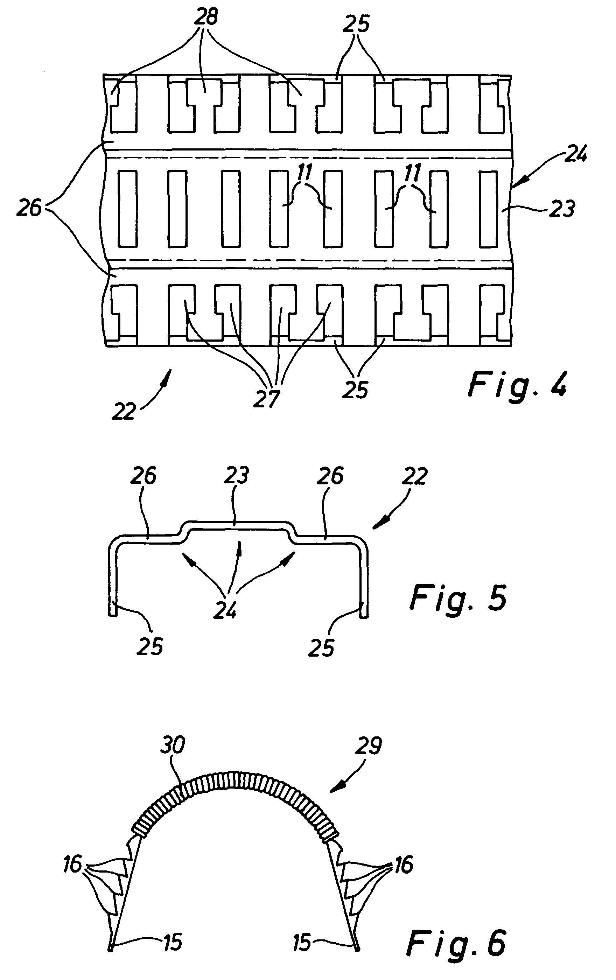

In den Figuren 4 und 5 ist eine Abwandlung des Halteblechs 10 dargestellt. Dieses Halteblech 22 ist wiederum als langgestreckte, im wesentlichen U-förmige Schiene ausgebildet. Die Haltedurchbrüche 11 sind nur im mittleren Bereich 23 des Verbindungsstegs 24 zwischen zwei streifenartigen U-Schenkeln 25 angeordnet. Dabei steht dieser mittlere Bereich 23 gegenüber den daneben verlaufenden seitlichen Bereichen 26 des Verbindungsstegs 24 an der zu den Schenkeln 25 gegenüberliegenden Seite des Verbindungsstegs 24 um einen Betrag vor, der im wesentlichen der Dicke der Isolierschicht eines zu fixierenden Kabels 12 entspricht, d.h., die Ebene des mittleren Bereichs 23 ist um diesem Bereich gegenüber der Ebene der seitlichen Bereiche 26 versetzt. Beim Fixieren eines Kabels 12 mittels einer Halteklammer 13 oder 20 kann dadurch das Kabel 12 linear quer zum Halteblech 22 verlaufen, indem der abisolierte Bereich am mittleren Bereich 23 und die anschließenden nicht abisolierten Bereiche des Kabels 12 an den seitlichen Bereichen 26 anliegen.

Die seitlichen Bereiche 26 weisen ausgestanzte Bereiche 27 auf, die sich zum Teil in die U-Schenkel 25 hinein erstrecken. Dabei bilden die ausgestanzten Bereiche 27 T-ähnliche Halteelemente 28 in der Ebene der seitlichen Bereiche 26, deren freie Enden jeweils nach außen weisen. Mittels dieser Halteelemente 28 können die noch mit der Isolierschicht versehenen Kabelbereiche zusätzlich mittels Kabelbindern oder dergleichen am Halteblech 22 fixiert werden.

In Figur 6 ist eine weitere abgewandelte Halteklammer 29 dargestellt. Während die Steckfüße 15 denjenigen der Halteklammern 13 und 20 entsprechen, ist der Haltebereich 14 durch eine Zugfeder 30 ersetzt, die eine Flachgestalt besitzt, deren Breite im wesentlichen der der Steckfüße 15 entspricht. Diese als Spiralfeder ausgebildete Zugfeder 30 ermöglicht eine noch variablere Anlage an einem oder mehreren mit dieser Halteklammer 29 zu fixierenden Kabeln, wobei auch sehr breite Kabel mit dieser Halteklammer 29 übergriffen werden können. Die Länge der Zugfeder 30 kann dabei den Erfordernissen angepaßt werden bzw. es können Halteklammern 29 mit unterschiedlich langen Zugfedern 30 vorgesehen sein.

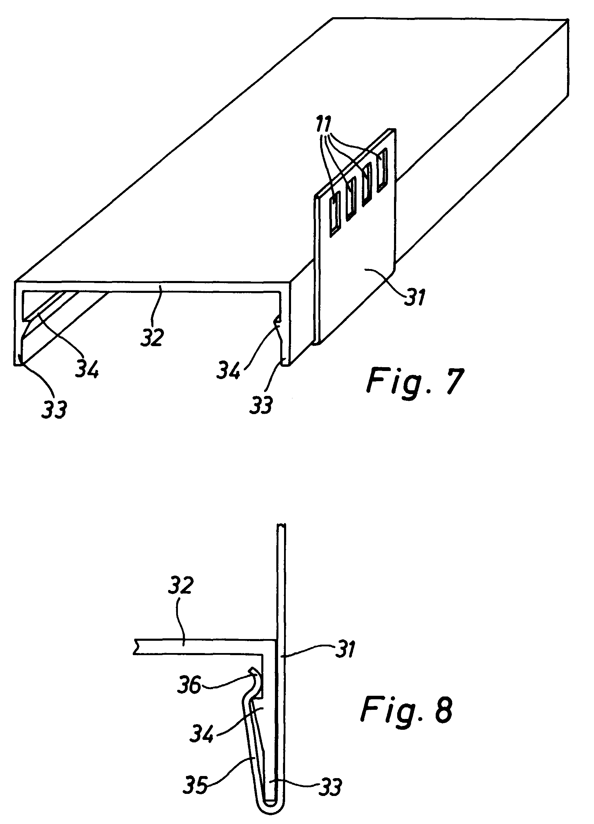

In den Figuren 7 und 8 ist ein konstruktiv abgewandeltes Halteblech 31 dargestellt. Dieses Halteblech 31 ist im Gegensatz zu den vorherigen Ausführungen nicht mehr selbst als Tragschiene ausgebildet, sondern wird an einer vorhandenen Tragschiene oder einem Montagesteg 32 fixiert, der hier ein U-förmiges Profil aufweist. An den Innenseiten der beiden U-Schenkel 33 dieses Montagestegs 32 sind Rastleisten 34 einstückig angeformt, wie dies der üblichen im Handel erhältlichen Montagestegen der Fall ist.

Das Halteblech 31 weist an einer Längsseite einen umgebogenen Haltebereich 35 auf, der wiederum einen gekrümmten Rastendbereich 36 besitzt. Dieser im wesentlichen um 180° umgebogene Haltebereich 35 wird auf einen U-Schenkel 33 des Montagestegs 32 so aufgeschoben, daß der Rastendbereich 36 mit der entsprechenden Rastleiste 34 verrastet. Durch entsprechende Krümmung des Rastendbereichs 36 kann eine relativ einfache Entrastung beim Abziehen des Halteblechs 31 erfolgen. Dieses Halteblech 31 liegt zum Teil an der Außenseite eines der U-Schenkel 33 an, wobei im überstehenden Bereich die Haltedurchbrüche 11 angeordnet sind.

Ein solches Halteblech 31 kann relativ kurz ausgebildet werden, wobei im Ausführungsbeispiel nur vier Haltedurchbrüche 11 vorgesehen sind. Dieses Halteblech 31 kann an einer beliebigen Stelle des Montagestegs 32 angeklemmt werden, und zwar jeweils an einer solchen Stelle, wo eine Kabelfixierung erforderlich ist. Bei Erfordernis können daher auch mehrere Haltebleche 31 in unregelmäßiger Anordnung am Montagesteg 32 fixiert werden, wobei ein solches Halteblech 31 im einfachsten Falle nur zwei Haltedurchbrüche 11 besitzt. Selbstverständlich sind auch langgestreckte Ausführungen solcher Haltebleche 31 mit sehr vielen Haltedurchbrüchen 11 möglich.

In einer alternativen Ausführung zum Haltebereich 35 kann ein ansonsten ähnlich wie das Halteblech ausgebildetes Halteblech mit einem rechtwinkelig oder Z-artig abgewinkelten Haltebereich versehen sein, der Haltelöcher zur Aufnahme von Halteschrauben besitzt. Ein so ausgebildetes Halteblech kann beispielsweise am mittleren Bereich des Montagestegs 32 oder einer Halteschiene oder einer sonstigen Haltefläche angeschraubt werden. Im Falle eines rechtwinklig abstehenden Haltebereichs 35 erstrecken sich die Maltedurchbrüche 11 dann senkrecht zur jeweiligen Montagefläche und im Falle eines Z-artig abgewinkelten Haltebereichs parallel dazu.

In Abwandlung der dargestellten Ausführungsbeispiele von Halteklammern können diese anstelle von streitenartigen Steckfüßen 15 prinzipiell auch anders gestaltete Steckfüße besitzen, beispielsweise Steckfüße mit rundem oder vieleckigem Querschnitt.

## Patentansprüche

1. Kabelhaltevorrichtung mit einem Halteblech (10; 22; 31), das eine Vielzahl von nebeneinander in Reihe angeordneten gleichartigen Haltedurchbrüchen (11) aufweist, mit wenigstens einer Halteklammer (13; 20; 29), die zwei durch einen Haltebereich (14; 30) miteinander verbundene Steckfüße (15) zum Einstecken in zwei der Haltedurchbrüche (11) besitzt und die im eingesteckten Zustand eine U-ähnliche Anordnung bildet, durch die ein zu fixierendes Kabel (12) umgreifbar und an das Halteblech (10; 22; 31) anpreßbar ist, wobei die Steckfüße (15) eine mit den Haltedurchbrüchen (11) verrastende Rastvorrichtung (16) aufweisen.

2. Kabelhaltevorrichtung nach Anspruch 1, dadurch gekennzeichnet, daß die Haltedurchbrüche (11) als parallele Schlitze ausgebildet sind.

3. Kabelhaltevorrichtung nach Anspruch 1 oder 2, dadurch gekennzeichnet, daß die Halteklammer (13; 20; 29) als elastisch federnde Anordnung ausgebildet ist, wobei die zum Einsetzen in die beiden Haltedurchbrüche (11) gegeneinander zu drückenden Steckfüße (15) im eingesetzten Zustand federnd an den am weitesten voneinander entfernten äußeren Kanten oder Kantenbereichen der beiden Haltedurchbrüche (11) anliegen.

4. Kabelhaltevorrichtung nach einem der vorhergehenden Ansprüche, dadurch gekennzeichnet, daß die beiden Steckfüße (15) in entgegengesetzte Richtungen weisende Rastvorsprünge (16) und/oder Rastausnehmungen aufweisen, die zur Verrastung mit den jeweils äußeren Kanten von zwei Haltedurchbrüchen (11) ausgebildet sind, wobei vorzugsweise jeder Steckfuß (15) wenigstens eine in der Steckrichtung verlaufende Reihe von Rastzähnen (16) aufweist.

5. Kabelhaltevorrichtung nach Anspruch 4, dadurch gekennzeichnet, daß jeder Steckfuß (15) als Blechstreifen ausgebildet ist, an dessen Längskanten nach außen abgewinkelt jeweils eine Reihe der Rastzähne (16) angeordnet, insbesondere einstückig angeformt ist.

6. Kabelhaltevorrichtung nach Anspruch 4 oder 5, dadurch gekennzeichnet, daß die Rastzähne (16) an ihren in die Einsteckrichtung weisenden Seiten das Einstecken erleichternde Zahnrampen und an den jeweils anderen Seiten im wesentlichen senkrecht zur Einsteckrichtung angeordnete Zahnkanten aufweisen.

7. Kabelhaltevorrichtung nach einem der vorhergehenden Ansprüche, dadurch gekennzeichnet, daß die aus Metallblech bestehende Halteklammer (13; 20) als einstückiges Stanz-/Biegeteil ausgebildet ist, wobei vorzugsweise eine im eingesteckten Zustand der Halteklammer (13; 20) elastisch gegen ein zu haltendes Kabel (12) drückende Haltefederanordnung (17; 21) an den Haltebereich (14) angeformt ist.

8. Kabelhaltevorrichtung nach Anspruch 7, dadurch gekennzeichnet, daß die Haltefederanordnung (17; 21) als einstückig an den Haltebereich (14) angeformter ein- oder mehrteiliger Blechstreifen ausgebildet ist, der sich von einer Kante des Haltebereichs (14) aus entlang der im eingesteckten Zustand zum Halteblech (10; 22; 31) hinweisenden Unterseite des Haltebereichs (14) erstreckt.

9. Kabelhaltevorrichtung nach einem der Ansprüche 1 bis 6, dadurch gekennzeichnet, daß der Haltebereich (30) als Zugfeder ausgebildet ist, die insbesondere eine Flachgestalt besitzt.

10. Kabelhaltevorrichtung nach einem der vorhergehenden Ansprüche, dadurch gekennzeichnet, daß das Halteblech (10; 22) einen U-förmigen Querschnitt besitzt, wobei die Haltedurchbrüche (11) am Verbindungssteg (24) zwischen den streifenartigen U-Schenkeln (25) angeordnet sind.

11. Kabelhaltevorrichtung nach Anspruch 10, dadurch gekennzeichnet, daß die Haltedurchbrüche (11) im mittleren Bereich (23) des Verbindungsstegs (24) angeordnet sind, und daß an den beiden seitlichen Bereichen (26) des Verbindungsstegs (24) Halteelemente (28) mit insbesondere T-förmiger Gestalt ausgeformt sind, wobei die Ebene des mittleren Bereichs (23) des Verbindungsstegs (24) vorzugsweise gegenüber der Ebene der beiden seitlichen Bereiche (26) zur vor den U-Schenkeln (25) abgewandten Seite hin versetzt ist.

12. Kabelhaltevorrichtung nach einem der Ansprüche 1 bis 9, dadurch gekennzeichnet, daß das Halteblech (31) an einer Seite mit einer insbesondere als umgebogener Endbereich des Halteblechs (31) ausgebildeten Halterung (35) zum klemmenden Anstecken oder Anschrauben an eine Tragschiene oder einen Montagesteg (32) und an der gegenüberliegenden Seite mit den Haltedurchbrüchen (11) versehen ist.

13. Kabelhaltevorrichtung nach Anspruch 12, dadurch gekennzeichnet, daß die Halterung (35) zur klemmenden Verrastung mit einem insbesondere an einem U-Schenkel (33) der Tragschiene oder des Montagestegs (32) angeordneten Raststreifen (34) oder als rechtwinkelig oder Z-artig abgewinkelter mit Haltelöchern für Schrauben versehener Bereich ausgebildet ist.

14. Kabelhaltevorrichtung nach einem der vorhergehenden Ansprüche, dadurch gekennzeichnet, daß das Halteblech (10; 22; 31) und die wenigstens eine Halteklammer (13; 20; 29) wenigstens teilweise aus einem elektrisch leitfähigen Material, insbesondere aus Metall bestehen.
